Europäisches Patentamt

**European Patent Office**

Office européen des brevets

(19)

(11) Publication number: **0 159 173**

**A2**

(12)

# EUROPEAN PATENT APPLICATION

(21) Application number: **85302463.6**

(22) Date of filing: **09.04.85**

(51) Int. Cl.⁴: **C 03 C 3/062**
**C 03 C 13/06**

(30) Priority: **10.04.84 US 598850**

(43) Date of publication of application:
**23.10.85 Bulletin 85/43**

(84) Designated Contracting States:
**DE FR GB**

(71) Applicant: **WALT DISNEY PRODUCTIONS**
**500 S. Buena Vista Street**
**Burbank California 91521(US)**

(72) Inventor: **Mackenzie, John D.**
**2456 Arbutus Drive**
**Los Angeles California 90049(US)**

(74) Representative: **Bizley, Richard Edward et al,**
**BOULT, WADE & TENNANT 27 Furnival Street**
**London EC4A 1PQ(GB)**

(54) Glass composition.

(57) A glass which is highly resistant to corrosive attack in an alkaline medium, consisting essentially of from about 35 to about 10 percent silicon oxide; from about 24 to about 10 percent oxides of iron; from about 26 to about 70 percent calcium oxide, magnesium oxide, or mixtures thereof; from about 5 to about 18 percent aluminum oxide; and up to about 6 percent sodium oxide (all percentages by weight). The glass is preferably prepared by combining slag produced by a municipal solid waste disposal plant with limestone or dolomite, and then forming a solid glass, as in the form of glass fibers. After the coating of the glass fibers with a bonding promoter, the fibers are advantageously employed as strengtheners in an alkali medium such as cement.

EP 0 159 173 A2

## GLASS COMPOSITION

This invention relates generally to glass, and, more particularly, to a glass which is resistant to alkaline corrosion.

For many years, asbestos fibers were incorporated into cement to increase the strength and fracture toughness of the cement. Glass fibers were considered as potential substitutes for asbestos fibers in reinforcing cement products. But, even when a glass fiber is coated with a coating called a sizing, it is found that the fiber may be severely attacked and possibly even disintegrated by the corrosive action of the alkaline cement environment, which typically has a pH of about 11-13. This susceptibility to attack and the relatively higher cost of alkaline-resistant glass fibers as compared to asbestos fibers resulted in only limited use of the glass fibers in reinforcing cement, until recently.

After it was discovered that asbestos fibers may be carcinogenic, their use in many applications such as cement was drastically curtailed, and the search for substitutes was accelerated. In the area of glass fiber reinforcement of cement, glass compositions having improved resistance to alkaline corrosion were discovered. Such inherent improved resistance is necessary even if the glass fibers are coated with sizing, as it is found that the sizing may not fully protect the fibers against the alkaline environment.

The previously most promising approach to the production of glass that is resistant to alkaline corrosion has been the use of zirconium oxide. A glass having about 20 percent by weight zirconium oxide ($ZrO_2$) is marketed under the name Cemfil by Pilkington Glass Co. for use as a reinforcing fiber in cement. While fibers with a high zirconium oxide content have improved resistance to alkaline corrosion as compared with conventional glass fibers, they are very expensive to produce. Moreover, even the expensive zirconium oxide-containing glasses experience some corrosion damage in an alkaline cement medium. Many other applications of glass are similarly limited by corrosion damage of the glass in an alkaline medium, such as, for example, the use of glass in marine applications and certain chemical reactors.

Accordingly, there has been a need for an improved glass which is highly resistant to the corrosive effects of an alkaline environment, and particularly the corrosive effects of wet cement when glass fibers are used as reinforcements for cement. Because the amounts of fibers used in reinforcing cement are large, it is particularly important that glass fibers or other glass products made from such an improved glass composition be manufactured inexpensively.

The present invention provides an improved glass composition and products having excellent resistance to corrosion in an alkaline environment. Fibers made from the composition of the invention may be incorporated into wet cement as reinforcements or into other alkaline media. The degredation of the fibers in the cement is at least generally less than observed for prior alkaline-resistant, zirconium-containing glass fibers, which are also far more costly than fibers made in accordance with the present invention. The glass of the present invention may be prepared from the slag produced by municipal solid waste disposal plants or similar facilities, thereby lowering the cost of the final product as well as providing an economical means for disposal of the slag.

In accordance with the invention, a glass may be prepared by mixing the slag from a municipal solid waste disposal plant or similar facility together with a source of a chemical selected from the group consisting of calcium carbonate, magnesium carbonate, and mixtures thereof, in an amount of from about 30 to about 80 percent of the weight of the total of slag plus calcium carbonate or magnesium carbonate, and then forming the glass (by melting the mixture). (As used herein, a reference to the amount or percentage of a "source" of a chemical refers to the amount or percentage of the chemical added, not including any impurities or other components included in the "source.") The source of the calcium carbonate or magnesium carbonate may be pure chemicals, but is preferably a relatively inexpensive mineral such as limestone or dolomite. Neither the slag nor the final glass composition requires the presence of expensive additives such as the zirconium oxide found in prior alkaline-resistant glasses. Although the composition of slag produced by a municipal solid waste plant can vary depending upon the input to the plant, it has been found that glasses having the improved properties can be made from a range of compositions of such slags.

In another aspect of the invention, there is provided a glass composition which consists essentially of from about 35 to about 10 percent silicon oxide ($SiO_2$); from about 24 to about 10 percent oxides of iron ($Fe_2O_3$ and $Fe_3O_4$);

from about 26 to about 70 percent calcium oxide (CaO), magnesium oxide (MgO), or mixtures thereof; from about 5 to about 18 percent aluminum oxide ($Al_2O_3$); and up to about 6 percent sodium oxide ($Na_2O$), the amounts of the constituents totalling 100 percent. (All percentages herein are by weight unless otherwise stated.) In a preferred embodiment, the glass composition consists essentially of from about 25 to about 20 percent silicon oxide; from about 24 to about 18 percent oxides of iron; from about 39 to about 51 percent calcium oxide, magnesium oxide, or mixtures thereof; from about 6 to about 8 percent aluminum oxide; and from about 2 to about 3 percent sodium oxide. In a most preferred embodiment, the glass composition consists essentially of about 22 percent silicon oxide; about 21 percent oxides of iron; about 46 percent calcium oxide, magnesium oxide, or mixtures thereof; about 7 percent aluminum oxide; and about 2 percent sodium oxide. The total of the percentages of the listed constituents in the most preferred embodiment is slightly less than 100, due to the presence of minor components. Minor amounts of other constitutents normally found in commercial glass-making operations, such as, for example, oxides of magnesum, manganese, potassium, copper, zinc, or chromium, may also be present in the glasses made in accordance with the invention, as long as such constituents do not have a significant adverse effect on the properties of the glass.

The constituents used to prepare the glass are placed into a refractory container in the proper proportions and melted. Typically, after the melt is homogenized, the temperature is adjusted to a level for glass forming, typically about 1300°C. The final glass products may then be formed by any desired technique, for example fiber drawing or extrusion. If the glass is prepared as a fiber, it may be coated wth a sizing and stranded or left as single fibers.

. Glass fibers having a composition in accordance with the invention are advantageously incorporated into wet cement either singly or in strands to strengthen the final cement product, wherein the glass fibers are highly resistant to the corrosive effects of the alkaline environment of the wet or dry cement. Preferably, the fibers are first coated with sizing to protect the fibers and improve their bonding with the environment, before incorporation into the cement.

It will be appreciated from the foregoing that the present invention represents a significant advance in the field of the economical preparation of glasses, particularly for use in an alkaline environment such as cement. Glass fibers highly resistant to alkaline corrosion may be prepared and coated with sizing to improve their bonding to the cement. Moreover, such fibers may be produced utilizing inexpensive raw materials, such as the slag of a municipal solid waste disposal plant and commonly available minerals such as limestone or dolomite.

The present invention is further described by way of example in the following more detailed description, taken in conjunction with the accompanying drawings, which illustrate, by way of example, the principles of the invention.

FIGURE 1 is a schematic illustration of a test arrangement for comparatively testing strengths of glass fibers embedded in cement; and

FIGURE 2 is a graph of the strength of glass fibers as a function of their diameters, illustrating the values for glass fibers prepared in accordance with the present invention and prior glass fibers.

In accordance with the invention, a glass is prepared from a mixture of from about 70 to about 20 percent by weight of slag produced by a municipal solid waste disposal plant and from about 30 to about 80 percent by weight of a source of calcium or magnesium carbonate, or a mixture thereof. Desirably, the calcium or magnesium carbonate is supplied from a mineral source such as limestone or dolomite, and most preferably is in an amount of from about 50 to about 60 percent. Limestone and dolomite are readily obtainable minerals having nominal compositions of $CaCO_3$ and $CaMg(CO_3)_2$, respectively, although other minerals are often mixed into the limestone and dolomite. During the glass melting process, the carbon content of the limestone or dolomite is removed as carbon monoxide or carbon dioxide, leaving the calcium oxide or magnesium oxide components.

Municipal waste disposal is an increasingly critical problem in many areas. Historically, waste was disposed of in landfills and/or by burning. Increased use of these methods is now undesirable due to land use and pollution restrictions, and unavailability of land. An alternative approach to disposal is a solid waste disposal plant wherein waste is heated in a furnace to drive off volatile components into a gas stream and reduce the remaining components to a slag. The slag is more compact than the solid waste, but large amounts of slag are produced and must be disposed of. The process of the present invention provides a use for the slag in manufacturing a useful glass, and allows the economical production of the glass.

Although the composition of the slag produced by a municipal solid waste disposal plant varies with the input waste, it is found in practice that a typical slag consists generally of from about 35 to about 45 percent silicon oxide; from about 10 to about 15 percent aluminum oxide; from about 20 to about 35 percent oxides of iron; from about 5 to about 10 percent calcium oxide; and from about 3 to about 8 percent sodium oxide. Minor amounts of other constituents normally present in slags are tolerated in the slag used in the process of the present invention, as long as their presence does not substantially reduce the alkaline resistance of the final glass product. Examples of such minor constituents include magnesium oxide (MgO), manganese oxide (MnO), potassium oxide ($K_2O$), copper oxide (CuO), zinc oxide (ZnO), and chromium oxide ($Cr_2O_3$). Most preferably, the slag has a composition consisting essentially of about 37 percent silicon oxide, about 35 percent oxides of iron, about 8 percent calcium oxide, about 11 percent aluminum oxide, about 4 percent sodium oxide, and less than about 5 percent of other constituents, the sum of all constituents totalling 100 percent. As an example of an acceptable slag and the minor constituents therein, the following slag was utilized in the preparation of samples for Examples 1-5 discussed below: FeO, 28.5; $SiO_2$, 36.8; $Al_2O_3$, 11.4; CaO, 8.3; MgO, 0.56; $Fe_2O_3$, 6.9; $Na_2O$, 4.0; $TiO_2$, 0.50; MnO, 0.16; $K_2O$; 0.53; CuO, 1.80; ZnO, 0.13; and $Cr_2O_3$, 0.19. Those skilled in the art will recognise that the precise composition of the slag may vary depending upon the input stream to the municipal solid waste disposal plant.

The present invention includes a method for making glass in which a material having a composition as defined above in respect of the slag is mixed together with calcium and/or magnesium carbonate in an amount of from 30 to 80 percent by weight of the total and forming the glass.

Inasmuch as the preferred procedure for preparing a glass in accordance with the invention involves mixing of a slag together with limestone or dolomite, or a mixture thereof, the acceptable range of variations may be determined by varying the proportions of these ingredients. For limestone or dolomite additions of less than about 30 percent by weight, the molten mixture of slag and limestone or dolomite is found to be too viscous to allow the preparation of glasses at an acceptable temperature of 1300°C. At higher temperatures, the degradation of the refractory furnace lining is so rapid that the glass-making process may not be feasible. For limestone or dolomite additions of greater than about 80 percent, the resulting glassy mixture is too fluid to form a glass and also damages the refractory furnace linings by dissolution.

The preferred limestone or dolomite addition within the acceptable range is from about 50 to about 60 percent. This preferred range results from a determination during the glass making operation that glass forming is most readily accomplished in this range, at an acceptable temperature of 1300°C. In the presently preferred glass-making approach, glass fibers are individually extracted from the melt by contacting a cold instrument to the surface of the melt and then withdrawing a stream of glassy fibers which rapidly cools to a solid form. The fibers may also be extruded or formed by any other method known to those skilled in the art, for example. Increasing amounts of limestone or dolomite lower the glass forming temperature, but increase the likelihood of crystallization of the glass. Lesser amounts of limestone or dolomite increase the glass forming temperature, with the consequent damage to the refractories indicated previously. The presently preferred limestone or dolomite range of from about 50 to about 60 percent represents a preferred compromise in these two effects.

For preparation of glass by other techniques, other compositions might be preferred. For example, glass wool may be made by impinging a gas stream on a liquid stream, or by forcing a stream of liquid glass against a drum having holes therethrough so that the wool emerges through the holes as a plurality of fine strands. In preparing glass wool by such approaches, a higher limestone or dolomite composition would be possible, and the preferred composition would shift to such compositions.

Also, in accordance with the invention, a glass consists essentially of from about 35 to about 10 percent silicon oxide; from about 24 to about 10 percent oxides of iron; from about 26 to about 70 percent calcium oxide, magnesium oxide, or mixtures thereof; from about 5 to about 18 percent aluminum oxide; and up to about 6 percent sodium oxide, all percentages by weight and the sum of all constituents totalling 100 percent. In a preferred embodiment, the glass composition consists essentially of from about 25 to about 20 percent silicon oxide; from about 24 to about 18 percent oxides of iron; from about 39 to about 51 percent calcium oxide, magnesium oxide, or mixtures thereof; from about 6 to about 8 percent aluminum oxide; and from about 2 to about 3 percent sodium oxide. A most preferred glass composition consists essentially of about 22 percent silicon oxide; about 21 percent oxides of iron; about 46 percent calcium oxide, magnesium oxide, or mixtures thereof; about 7 percent aluminum oxide; and about 2 percent sodium oxide.

The high level of iron oxides is believed to be important, as iron forms a hydroxide having very low solubility in alkaline solutions. It is therefore believed that the iron compounds form a protective layer that resists rapid alkaline attack, although applicant does not wish to be bound by this possible explanation. The low level of silicon oxide is also believed to be important, as alkali resistance is observed to improve with decreasing amounts of silicon oxide.

Whatever their source, the constituents of the glass are mixed together in a crucible or other refractory container such as alumina and, preferably, heated to a temperature of about 1500$^O$C. The heating may be done in air, as the constituents are used in their oxidized states. At this temperature, the constituents melt together into a fluid mass and are homogenized. The temperature of the melt is adjusted to the glass forming temperature, if necessary. The preferred glass forming temperature is about 1300$^O$C. The glass products are then formed by any suitable technique.

In the presently preferred approach, glass fibers are up-drawn from the surface of the melt by touching a cold instrument to the surface of the melt and drawing a glass fiber therefrom.

The following examples are intended to illustrate aspects of the invention, but should not be taken as limiting the scope of the invention.

EXAMPLE 1

The following compositions were prepared by mixing together the indicated proportions of slag from a municipal waste disposal plant and calcium carbonate in the form of limestone. The composition of the slag from the municipal waste disposal plant was about 37 percent silicon oxide, about 35 percent oxides of iron, about 8 percent calcium oxide, about 11 percent aluminum oxide, about 4 percent sodium oxide, and minor amounts of other constituents as listed previously, the sum of all constituents totalling 100 percent. The samples were prepared by mixing together the proper proportions of slag and limestone in an alumina crucible and melting at a temperature of 1500$^O$C in a gas fired furnace in air. Compositions were prepared in accordance with the following Table I (minor constituent percentages are omitted):

TABLE I

| Percentages | Sample Number | | | | | | |
|---|---|---|---|---|---|---|---|
| | 1-1 | 1-2 | 1-3 | 1-4 | 1-5 | 1-6 | 1-7 |
| Limestone | 50 | 55 | 60 | 65 | 70 | 75 | 80 |
| Calculated Silicon oxide * | 23.6 | 21.9 | 20.0 | 18.0 | 15.9 | 13.7 | 11.4 |
| Calculated Oxides of Iron* | 22.6 | 20.8 | 19.1 | 17.2 | 15.2 | 13.1 | 10.8 |
| Calculated total Calcium Oxide and Magnesium Oxide* | 41.7 | 45.9 | 50.4 | 55.3 | 60.5 | 65.9 | 71.9 |
| Calculated Aluminum Oxide* | 7.3 | 6.8 | 6.2 | 6.6 | 4.9 | 4.3 | 3.5 |
| Calculated Sodium Oxide* | 2.6 | 2.4 | 2.2 | 2.0 | 1.7 | 1.5 | 1.2 |

*Calculated weight percentages based on the ratio of slag and limestone.

Glasses could be formed and fibers drawn from the melt at 1300°C for the compositions 1-1 to 1-7. Compositions of preliminary samples having less than about 30 percent limestone were too viscous for glass forming at 1300°C, and were excessively corrosive to the refractory linings at greater temperatures. A glass could not be formed in preliminary samples having compositions of greater than about 80 percent limestone, because of excessively high fluidity leading to crystallization, so that a glass could not be formed.

EXAMPLE 2

The following compositions were prepared by mixing together the indicated proportions of slag from a municipal solid waste disposal plant and calcium-magnesium carbonate in the form of dolomite. The composition of the slag from the municipal waste disposal plant was about 37 percent silicon oxide, about 35 percent oxides of iron, about 8 percent calcium oxide, about 11 percent aluminum oxide, about 4 percent sodium oxide, and minor amounts of other constituents as listed previously, the sum of all constituents totalling 100 percent. The samples were prepared by mixing together the proper proportions of slag and dolomite in an alumina crucible and melting at a temperature of 1500°C in a gas fired furnace in air. Compositions were prepared in accordance with the following Table II (minor constituent percentages are omitted):

TABLE II

| Percentages | Sample Number | | | |
|---|---|---|---|---|
| | 2-1 | 2-2 | 2-3 | 2-4 |
| Dolomite | 50 | 60 | 75 | 80 |
| Calculated Silicon oxide* | 23.7 | 20.7 | 14.4 | 12.0 |
| Calculated Oxides of Iron* | 24.9 | 19.7 | 13.7 | 11.7 |
| Calculated Total Calcium Oxide and Magnesium Oxide* | 39.2 | 48.8 | 64.4 | 70.6 |
| Calculated Aluminum Oxide* | 7.4 | 6.4 | 4.5 | 3.7 |
| Calculated Sodium Oxide* | 2.6 | 2.3 | 1.6 | 1.3 |

*Calculated weight percentages based on the ratio of slag and dolomite.

Glasses could be formed at 1300°C from all of compositions 2-1 to 2-4.

## EXAMPLE 3

. Glass fibers prepared from a composition in accordance with the present invention were tested for their resistance to strength loss when embedded in concrete.

A glass melt was prepared by melting together a mixture of 45 weight percent of a slag and 55 weight percent dolomite in an alumina crucible in air at $1500^{\circ}C$. The composition of the slag was about 37 weight percent silicon oxide, about 35 percent oxides of iron, about 8 percent calcium oxide, about 11 percent aluminum oxide; about 4 percent sodium oxide, and minor amounts of other constituents, the sum of all constituents totalling 100 percent. Fibers of about 52 microns diameter were prepared by up-drawing from the melt at $1300^{\circ}C$. One group of fibers was left uncoated and the other group was coated with a sizing prepared by dissolving 3 volume percent vinyl acetate and 1 volume percent silane in 96 volume percent distilled water.

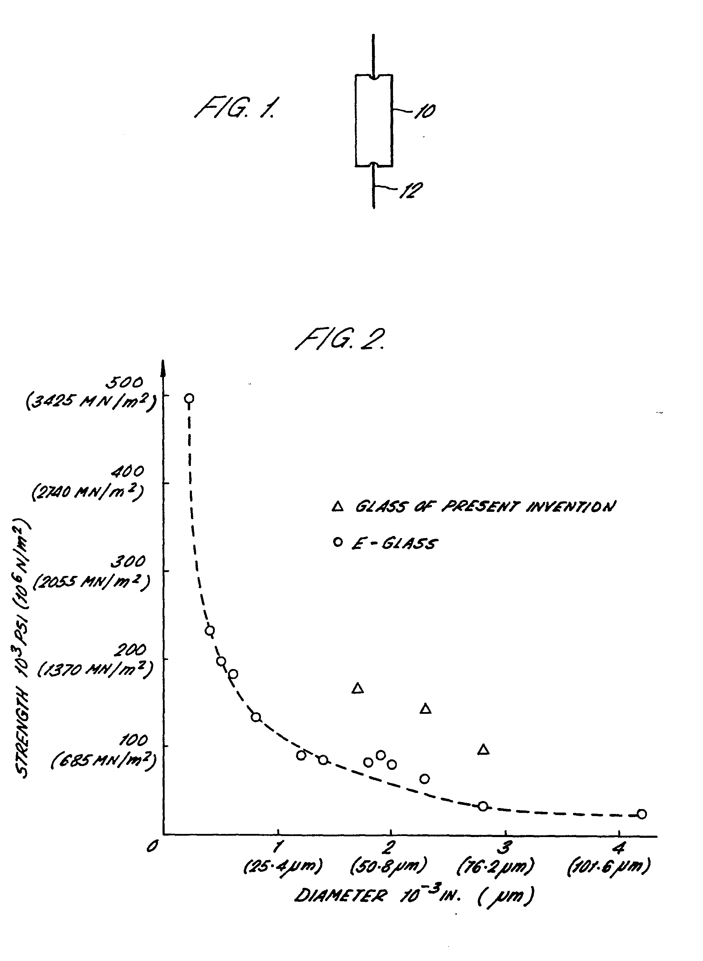

Fiber samples of each type were enclosed in cement blocks for testing, as illustrated in FIGURE 1. A block of cement 10 having dimensions of about 5 cm long and 1 cm by 1 cm in cross section was cast over the fiber 12 and allowed to harden in air for 24 hours at $80^{\circ}C$. The blocks 10 and embedded fibers 12 were then placed into a water bath at $80^{\circ}C$, and samples were removed for testing after various periods of time. After removal from the bath, the blocks 10 were carefully cracked open and the fiber 12 extracted for testing. The fiber 12 was placed on a piece of paper and fixed in place at each end with epoxy. The paper was then cut away. The epoxy at each end of the fiber 12 was gripped in the jaws of an Instron testing machine and loaded to failure in tension at cross head travel speeds of 0.02-0.05 inches (0.51-1.27 mm) per minute. (No effect of cross head speed variation was observed.) The following

strengths were determined:

## TABLE III

| Time in Water at 80°C (hours) | Strength of Coated Fiber (MPa) | Strength of Uncoated Fiber (MPa) |
|---|---|---|
| 0 | 573 ± 98 | 501 ± 40 |
| 24 | 391 ± 137 | 409 ± 113 |
| 48 | 400 ± 44 | 273 ± 55 |
| 72 | 351 ± 23 | 298 ± 89 |
| 96 | 297 ± 73 | 283 ± 33 |

Although there is some statistical variation in the strengths, generally the coated fibers are slightly stronger than the uncoated fibers, and both experience comparable strength losses with increased exposure.

Example 4

Fibers prepared as in Example 3 and E-glass fibers as described in Example 5 were placed in a cement paste, which was then placed in an autoclave operating at 205°C in steam for 2 hours. After 2 hours the blocks were removed from the autoclave and carefully broken open to extract the fibers. This severe test caused disintegration of conventional E-glass fibers. The surfaces of the coated and uncoated fibers of the present invention were inspected at magnifications as high as 266x, and were found to be virtually unattacked and unaltered.

EXAMPLE 5

The tensile strength of fibers made from a prior glass and from a glass in accordance with the invention were determined by measuring the strengths as a function of fiber diameter. The prior E-glass had a composition of about 55.2 percent silicon oxide, 14.8 percent aluminum oxide, 7.3 percent boron oxide, 3.3 percent magnesium oxide, 18.7 percent calcium oxide, and minor amounts of other constituents. The glass in accordance with the invention was prepared by melting together a mixture of 25 weight percent of a slag and 75 weight percent dolomite in an alumina crucible at 1500°C in air. The composition of the slag was about 37 weight percent silicon oxide; about 35 percent oxides of iron; about 8 percent calcium oxide; about 11 percent aluminum oxide; about 4 percent sodium oxide; and minor amounts of other constituents totalling 100 percent. Fibers of various diameters were prepared by up-drawing from the melt at 1300°C, as previously described.

A 10 centimeter long length of each sample was gripped between the jaws of an Instron testing machine by the technique described in Example 3 and loaded by the technique described in Example 3.

As is well known in the art, the strength of glass fibers decreases with increasing fiber diameter. Figure 2 illustrates the strength of the prior E glass fibers as a function of diameter of the fiber. For comparison, three data points for the fibers prepared in accordance with the invention are shown on the graph. The strengths of the fibers in accordance with the present invention are significantly greater than those of the prior glass, and follow the same trend of increasing strength with decreasing fiber diameter.

Example 6

A series of glasses was prepared from mixtures of a slag and limestone ($CaCO_3$) having various proportions. The compositions of the slag and the glasses are shown in Table IV.

## Table IV

| Constituent | Sample | | | |
|---|---|---|---|---|
| | 6-1 Original Slag | 6-2 70% Slag, 30% CaCO$_3$ | 6-3 60% Slag, 40% CaCO$_3$ | 6-4 50% Slag 50% CaCO$_3$ |
| SiO$_2$ | 45 | 37.2 | 33.5 | 29.4 |
| TiO$_2$ | 1 | 0.8 | 0.7 | 0.7 |
| Al$_2$O$_3$ | 10 | 8.3 | 7.4 | 6.5 |
| Fe$_2$O$_3$ | 25 | 20.7 | 18.6 | 16.3 |
| CaO | 8 | 26.4 | 33.7 | 41.8 |
| MgO | 2 | 1.7 | 1.5 | 1.3 |
| Na$_2$O | 6 | 5.0 | 4.5 | 3.9 |

The samples were prepared by placing pieces of slag and mixtures of crushed slag and limestone in the appropriate percentages into an alumina cricible, in air in an electric furnace. The melt of sample 6-1 was too viscous to cast, and fibers could not be drawn. The mixtures (Samples 6-2 to 6-4) were castable and could be drawn into fibers. Sample 6-2 was melted into glass after 30 minutes at 1450 $^\circ$C. This melt was castable and could be drawn into fibers, but with some difficulty. Sample 6-4 was melted into glass after 30 minutes at 1350$^\circ$C. This melt was castable and readily drawn into fibers.

Example 7

Further tests were conducted on cast pieces of samples 6-2, 6-3 and 6-4, and comparison tests were conducted on window glass and Cemfil high-zirconia alkali-resistant glass. The composition by weight of Cemfil is about 60 percent silicon oxide; about 20 percent zirconium oxide; about 1.5 percent aluminum oxide; about 2.5 percent calcium oxide; and about 16 percent sodium oxide. Results are shown in Table V:

Table V

| Property | Sample | | | | |
|---|---|---|---|---|---|
| | 6-2 | 6-3 | 6-4 | Window Glass | Cemfil Glass |
| Density | 2.99 | 3.00 | 3.02 | 2.50 | 2.59 |
| Thermal Expansion Coefficient per $^{o}C$ (x$10^{7}$) | 79 | 85 | 90 | 90 | 61 |
| Glass Transition ($^{o}C$) | 620 | 622 | 638 | 530 | 637 |
| Glass Softening ($^{o}C$) | – | – | 890 | 712 | – |
| $10^{3}$ Poise Viscosity ($^{o}C$) | 1350 | 1350 | 1350 | 1200 | 1700 |
| Fiber Drawing ($^{o}C$) | 1300 | 1300 | 1300 | 1100 | 1500 |
| Knoop Hardness (Kg/mm$^{2}$) | – | – | 570 | 530 | – |

All properties were measured by conventional techniques.

Example 8

Tests were run to determine the resistance of various prior glasses and the glasses of Example 6 to the corrosive effects of an alkaline environment. To perform the tests, 1 gram of glass was pulverized and placed into 100 ml of an aqueous 5 percent sodium hydroxide solution at 90$^{o}$C for 72 hours, stirring constantly. The remaining solid particles were separated from the liquid by filtration, dried and weighed. A weight loss percentage was then determined.

Results were as follows:

| | Sample | | | | |
|---|---|---|---|---|---|
| | 6-2 | 6-3 | 6-4 | Window Glass | Cemfil Glass |
| Weight Loss, % | 5.9 | 3.8 | 2.4 | 4.2 | 4.1 |

## Example 9

Tests were conducted to determine the weight loss of various prior glasses and the glasses of Example 6 in a hot water environment. To perform the tests, 1 gram of glass was pulverized and placed into water at 90°C for 72 hours. The remaining solid particles were separated from the liquid by filtration, dried and weighed. A weight loss percentage was then determined.

Results were as follows:

|  | Sample | | | Window Glass | Cemfil Glass |
|---|---|---|---|---|---|
|  | 6-2 | 6-3 | 6-4 | | |
| Weight Loss, % | 0.4 | 0.4 | 0.4 | 3.0 | 0.6 |

Significantly, the weight loss properties in water of samples 6-2 to 6-4 are superior to window glass and Cemfil glass. The weight loss properties in sodium hydroxide solution of samples 6-3 and 6-4 are superior to the high-zirconia Cemfil glass, which is more expensive and must be fiber drawn at a much higher temperature.

It will now be appreciated that, through the use of this invention, glass having excellent strength and corrosion resistance properties in an alkaline environment may be readily and economically prepared, preferably from the byproducts of a municipal waste disposal plant and readily available minerals. It is estimated that the glass of the invention may be prepared at a cost per unit weight of about 1/3 that of high-zirconia alkali-resistant glass. The glass may be prepared in the form of fibers which can be used to strengthen materials such as cement, organic plastics and textiles, as well as other forms.

Although a particular embodiment of the invention has been described in detail for purposes of illustration, various modifications may be made without departing from the scope of the invention.

CLAIMS:

1. A glass, consisting essentially of: from 35 to 10 percent silicon oxide; from 24 to 10 percent oxides of iron; from 26 to 70 percent of calcium oxide, magnesium oxide, or a mixture thereof; from 5 to 18 percent aluminum oxide; and up to 6 percent sodium oxide, the sum of all constituents totalling 100 percent, with all percentages by weight.

2. A glass as claimed in claim 1, wherein the composition consists essentially of from 25 to 20 percent silicon oxide; from 24 to 18 percent oxides of iron; from 39 to 51 percent of calcium oxide, magnesium oxide, or a mixture thereof; from 6 to 8 percent aluminum oxide; and from 2 to 3 percent sodium oxide.

3. A glass as claimed in claim 1, wherein the composition consists essentially of substantially 22 percent silicon oxide; substantially 21 percent oxides of iron; substantially 46 percent of calcium oxide, magnesium oxide, or a mixture thereof; substantially 7 percent aluminum oxide; and substantially 2 percent sodium oxide.

4.  A glass as claimed in any one of the preceding claims, further including less than an amount of substantially 5 percent of minor elements found in commercial glass making.

5.  A composition consisting essentially of from 30 to 80 percent of a source of calcium carbonate, magnesium carbonate, or a mixture thereof; and from 70 to 20 percent of a slag produced by a solid waste disposal plant, the sum of all constituents totalling 100 percent, all percentages being weight.

6.  A composition as claimed in claim 5, wherein said source is present in an amount of from 50 to 60 percent.

7.  A composition as claimed in claim 5 or claim 6, wherein said source is dolomite, limestone, or a mixture thereof.

8.  A composition as claimed in any one of claims 5 to 7, wherein the slag consists essentially of from 35 to 45 percent silicon oxide; from 10 to 15 percent aluminum oxide; from 20 to 35 percent oxides of iron; from 5 to 10 percent calcium oxide; from 3 to 8 percent sodium oxide; the sum of all constituents totalling 100 percent and all percentages being by weight.

9. A composition as claimed in claim 8, wherein the composition of the slag consists essentially of substantially 37 percent silicon oxide; substantially 35 percent oxides of iron; substantially 8 percent calcium oxide, substantially 11 percent aluminum oxide; and substantially 4 percent sodium oxide.

10. A process for preparing glass, comprising mixing a slag from a solid waste disposal plant and a source of calcium carbonate, magnesium carbonate, or a mixture thereof, in an amount of from 30 to 80 percent by weight of the total, and forming the glass.

11. A process as claimed in claim 10, wherein the slag is as defined in claim 8 or claim 9.

12. A process as claimed in claim 10 or claim 11, wherein said source is in an amount as defined in claim 6 and/or is as defined in claim 7.

13. A process for preparing glass, comprising mixing a material having a composition as defined in respect of the slag in claim 8 or claim 9 and calcium carbonate, magnesium carbonate or a mixture thereof, in an amount of from 30 to 80 percent by weight of the total, and forming the glass.

14. A process as claimed in any one of claims 10 to 13 wherein the glass is as defined in any one of claims 1 to 4.

15. A process as claimed in any one of claims 10 to 14, wherein the glass is formed as fiber and, optionally, the glass fiber is coated with sizing.

16. A process for reinforcing a cement composition, comprising:

preparing glass fiber by a method as defined in claim 15, embedding the fiber in the wet cement composition; and hardening the cement composition.

17. A cement composition containing glass fiber having a composition as defined in any one of claims 1 to 4 or prepared by a method as claimed in claim 15.

1/1

FIG. 1.

FIG. 2.